Europäisches Patentamt

European Patent Office

Office européen des brevets

(11) Publication number: **0 158 812**
**B1**

## (12) EUROPEAN PATENT SPECIFICATION

(45) Date of publication of patent specification: **17.08.88**    (51) Int. Cl.⁴: **G 21 C 7/10**

(21) Application number: **85102690.6**

(22) Date of filing: **09.03.85**

(54) Control rod spider assembly for a nuclear reactor fuel assembly.

(30) Priority: **30.03.84 US 595154**

(43) Date of publication of application:
**23.10.85 Bulletin 85/43**

(45) Publication of the grant of the patent:
**17.08.88 Bulletin 88/33**

(84) Designated Contracting States:
**BE DE FR GB IT SE**

(56) References cited:
**EP-A-0 054 787**
**DE-A-2 248 398**
**DE-A-2 406 595**
**FR-A-2 168 564**

(73) Proprietor: **WESTINGHOUSE ELECTRIC**
**CORPORATION**
**Westinghouse Building Gateway Center**
**Pittsburgh Pennsylvania 15235 (US)**

(72) Inventor: **Francis, Trevor Andrew**
**504 Green Haven Court**
**Pittsburgh Pennsylvania 15239 (US)**

(74) Representative: **Patentanwälte Dipl.-Ing. R.**
**Holzer Dipl.-Ing. (FH) W. Gallo**
**Philippine-Welser-Strasse 14**
**D-8900 Augsburg (DE)**

Courier Press, Leamington Spa, England.

**Description**

The present invention relates generally to nuclear reactors and, more particularly, to an improved spider assembly for supporting an array of control rods, especially water displacer rods, for vertical movement within a reactor.

In most nuclear reactors the core portion comprises a large number of elongate fuel elements or rods grouped in and supported by frameworks referred to as fuel assemblies. The fuel assemblies are generally elongate and receive support and alignment from upper and lower transversely extending core support plates. Conventional designs of these fuel assemblies include a plurality of fuel rods and hollow control-rod guide thimbles held in an organized array by grids spaced along the fuel assembly length and attached to the guide thimbles. Top and bottom nozzles on opposite ends thereof are secured to the guide thimbles, thereby forming an integral fuel assembly. Generally, in most reactors, a fluid coolant, such as water, is directed upwardly through apertures in the lower core support plate and along the various fuel assemblies to receive the thermal energy therefrom.

One method of controlling the reactivity within the core involves the use of neutron absorbing elements or rods, commonly referred to as "control rods", which are moved into and out of the core region and generally comprise a material having a high neutron absorption cross-section, such as boron carbide, tantalum, a combination of silver-indium and cadmium, or the like, as well known in the art.

In FR-A-2 168 564, there is described a pressurized-water reactor including a control-rod drive arrangement which, for each fuel assembly in a controlled core location, employs several control-rod drive shafts circularly arrayed in parallel-spaced relationship with respect to one another, and each carrying a web or spider of straight or Y-like cross-section which extends from the associated drive shaft radially outward, with respect to the circular array, and supports two control rods. Each assembly consisting of one of the drive shafts plus the spider and the control rods associated therewith extends through, and is axially movable in, a suitable contoured guide-tube structure.

More recently, and as shown in US-A-4 326 919 for example, it has been customary to employ for each controlled core-location a spider assembly connected through a single shaft to a control-rod drive mechanism and comprising a central hub with radial vanes extending therefrom and including cylindrical control-rod connecting fingers for connection thereof to control rods movable in guide thimbles of the fuel assembly associated with the respective controlled core-location. Each of the radial vanes is a flat metal plate positioned on edge and having its top edge tapered inwardly and upwardly from the outer terminal, or distal, end of the vane so as to give the latter a pennant-like appearance and provide it with an inner edge long enough to permit the vane to be securely affixed to the hub. Some of the radial vanes have thereon one control-rod connecting finger per vane whilst others have two such fingers spaced apart radially along the associated vane. Due to the pennant-like configuration of the radial vanes and to the mounting of the latter at different axial or height locations on the hub, the fingers nearest to the latter are at a higher axial elevation than those more distant therefrom, thereby enabling them to assist in aligning the spider assembly as it is raised into the upper internals of the reactor through corresponding operation of the drive mechanism associated therewith. Conventionally, the vanes and fingers of such spider assembly are manufactured as separate components and then welded together to form vane-finger sub-units which, in turn, are welded to the central hub so as to form an integral unit constituting the finished spider assembly; of course, this requires several manufacturing steps and welding operations, and requires further that each of the welds be inspected in order to assure that it is sound and capable of sustaining the load of the control rods as well as the various moment forces generated during stepping operations, that is, during operations when the spider assembly and thus the control rods connected thereto are raised and lowered.

As well known in the art, core reactivity can be controlled, not only by moving control rods into and out of the core, but also by changing the core's coolant/moderator inventory so as to vary the neutron-energy spectrum. There are several known ways of changing the coolant/moderator inventory, a commonly used one involving the use of so-called water displacer rods inserted usually into non-used control-rod guide thimbles for the purpose of displacing the neutron-moderating coolant therein and thereby changing the volume of water in the associated fuel assembly so as to moderate the reactivity of the fuel therein. Usually, the water displacer rods to be used with a given fuel assembly are supported, at their upper ends from a spider assembly resting on the top nozzle of the fuel assembly. However, since water displacer rods ordinarily are moved but infrequently, namely, upon initial insertion and perhaps a year or so later again upon withdrawal, conventional spider assemblies for supporting them usually are not structurally designed to be operated frequently and to withstand load and moment forces such as generated by control-rod stepping operations.

In Applicant's EP-A-O 054 787 there is disclosed an arrangement wherein some of the fuel assemblies of the reactor core each have associated therewith a spider with vanes for supporting either control rods (containing neutron absorbing material) or so-called gray rods (similar to water displacer rods but made of an intermediate neutron absorbing material and therefore possessing higher reactivity worth per rod) in the fuel assembly associated with the spider, and wherein others of the fuel assemblies each have associated therewith a spider with some vanes for supporting water displacer rods in the fuel assembly associated with the spider, and with other vanes for supporting displacer rods in the associated fuel assembly and additional rods in adjacent fuel assemblies. All of the vanes of this latter kind of spider employed in EP-A-O 054 787 are T-bar vanes each consisting of a rod-supporting radial vane portion and a rod-supporting, shorter T-bar extending substantially at right angles with respect to the radial vane portion. There is only one practical way of fabricating T-bar vanes, namely, by casting.

It is the principal object of the invention to provide an improved spider assembly suitable for simultaneously supporting either control rods or displacer type rods in a fuel assembly associated with the spider assembly and also in fuel assemblies adjacent thereto, and which spider assembly, moreover, can be manufactured at lower cost than a spider featuring only T-bar vanes.

The invention accordingly resides in a spider assembly for supporting control rods for vertical movement thereof in a nuclear reactor having a plurality of fuel assemblies disposed therein in closely spaced relationship with respect to each other, said spider assembly including a hub having thereon a first group of radial vanes which are spaced circumferentially about said hub substantially ninety degrees from each other and have fingers for connection thereof to some of the control rods in one fuel assembly having the spider assembly associated therewith, and a second group of radial vanes which are spaced circumferentially about said hub substantially ninety degrees from each other and in alternating sequence with respect to the radial vanes of said first group, the vanes of said second group having thereon some fingers for connection thereof to the remaining control rods in said one fuel assembly, and additional fingers for connection thereof to control rods in fuel assemblies adjacent thereto, characterized in that the radial vanes of said first group are straight vanes, and the radial vanes of said second group are T-bar vanes of greater radial dimension than said straight vanes and each including an outer T-bar which is located at the distal end of the associated T-bar vane, extends substantially perpendicular with respect to the radial direction thereof, and has one of said additional fingers disposed on each end thereof, and an inner T-bar which extends in substantially parallel spaced relationship with respect to the outer T-bar between the latter and said hub and has one of said some fingers disposed on each end thereof.

The most practicable method of manufacturing the T-bar vanes for this spider assembly will still be casting.

The straight vanes, too, may be cast, if desired, but they also lend themselves to being fabricated in a manner, such as by swaging, which allows the overall cost of the spider assembly to be substantially reduced.

In order to maximize the structural strength and rigidity of this spider assembly, each of the straight and T-bar vanes, together with the respective fingers thereon, preferably is of a monolithic one-piece construction forming a jointless sub-unit secured to the hub.

In order to maximize the ability of the spider assembly to withstand the moment forces generated during stepping actions, each of the straight and T-bar vanes preferably is of substantially constant axial height rather than pennant-shaped, and all of the vanes are mounted on the central hub at substantially the same axial height location which latter feature also simplifies the fabrication of the spider assembly while still enabling the inner fingers on the vanes to be extended beyond and above the outer fingers for the purpose of facilitating the alignment of the spider assembly with the upper internals of the reactor.

A preferred embodiment of the invention will now be described, by way of example only, with reference to the accompanying drawings, in which:-

Figure 1 is an elevational, partly sectional view showing closely spaced fuel assemblies in vertically foreshortened form and with parts broken away for clarity, together with a portion of an upper core support plate and with the spider assembly embodying the invention;

Figure 2 is an enlarged top plan view of the spider assembly;

Figure 3 is a sectional view of the spider assembly, as taken along line 3-3 of Figure 2, and with the water displacer rods shown in vertically foreshortened outline form; and

Figure 4 is an enlarged, exploded view of one of the T-bar vane sub-units and of a portion of the central hub of the spider assembly.

In the following description, like reference characters designate like or corresponding parts throughout the several views, and terms such as "forward", "rearward", "left", "right", "upwardly", "downwardly" and the like are words used of convenience not to be construed as limiting terms.

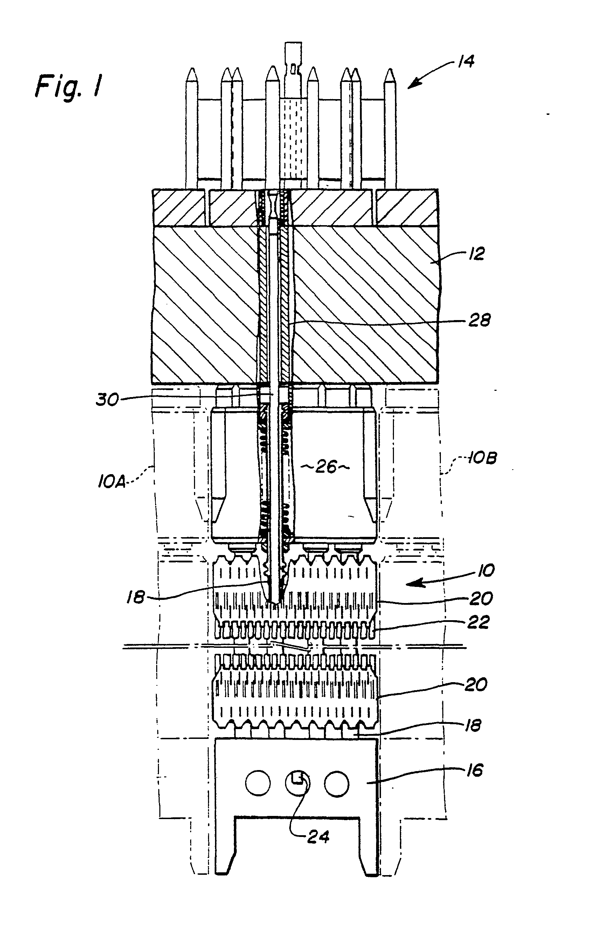

Referring now to the drawings, and particularly to Figure 1, there is shown an overall combination (inter-face) of fuel assemblies (the middle one being generally designed with numeral 10 and and the others, shown in phase form, being indicated at 10A and 10B), an upper core support plate 12 disposed above and extending across the tops of the fuel assemblies and a spider assembly 14 embodying the invention and generally designated by the numeral 14.

The fuel assemblies 10, 10A and 10B are identical. Describing the assembly 10 as representative of all, it basically comprises a lower end structure or bottom nozzle 16 for supporting the assembly on the lower core plate (not shown) in the core region of a reactor; a number of guide tubes or thimbles 18 projecting longitudinally upward from the bottom nozzle 16; a plurality of transverse grids 20 axially spaced along the guide thimbles 18; an organized array of elongate fuel rods 22 transversely spaced and supported by the grids 20; an instrument tube 24 located in the centre of the assembly; and an upper end structure or top nozzle 26 attached to the upper ends of the guide thimbles 18 to form therewith an integral assembly capable of being conventionally handled without damaging the assembly components. The fuel assemblies, such as assembly 10, do not form part of the invention proper and, therefore need not be described herein in greater detail.

The upper core support plate 12, being conventional, extends across the top of the fuel assembly 10 as well as across the top of other fuel assemblies, such as 10A, 10B, arranged within the core. The core plate 12 has a multiplicity of flow openings or passages 28 (only one of which is shown in Figure 1) which allow coolant to pass upwardly through the core. At least some of these openings or passages are axially aligned with guide thimbles 18 so as to enable water displacer rods 30 to be inserted down through the core plate passage and into the respective guide thimbles of the fuel assemblies 10, 10A and 10B.

Connected to the upper ends of the displacer rods 30 is the spider assembly 14 which supports the rods for vertical movement within the guide thimbles 18 effected by means of a conventional drive mechanism (not shown). It should be noted that although the spider assembly is shown in Figure 1 as disposed above the core plate 12 upon which it will rest when the displacer rods 30 are fully inserted in the guide thimbles 18, there are other arrangements with which the spider assembly 14 embodying the invention could be used and in which it would be located between the bottom of the core plate and the top of the fuel assembly.

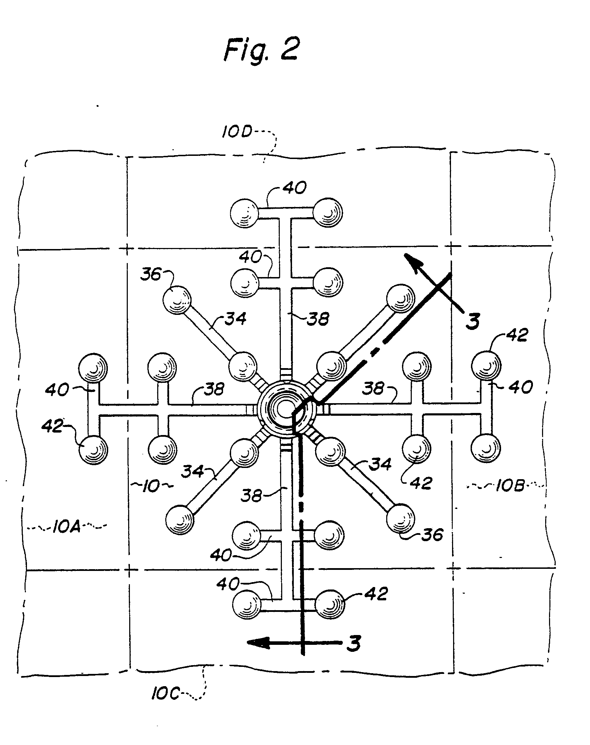

Referring now to Figures 2, 3 and 4 of the drawings, the spider assembly 14 basically comprises a central hub 32, a first group of vanes 34 radially extending outwardly from the hub 32 and including fingers 36 for connection to displacer rods, and a second group of vanes 38 which extend radially outward from the hub and have T-bars 40 with fingers 42 for connection to displacer rods. The fingers 36 on the first group of vanes 34 (hereinafter referred to as straight vanes) and the fingers 42 on the second group of vanes 38 (hereinafter referred to as T-bar vanes) are substantially identical. As seen best from Figure 2, the fingers 36 of the straight vanes 34 are for connection to displacer rods associated with the fuel assembly 10, whereas some of the fingers 42 of the T-bar vanes 38 are for connection to displacer rods associated with fuel assembly 10 whilst others of the fingers 42 are for connection with displacer rods associated with adjacent fuel assemblies 10A, 10B, 10C and 10D.

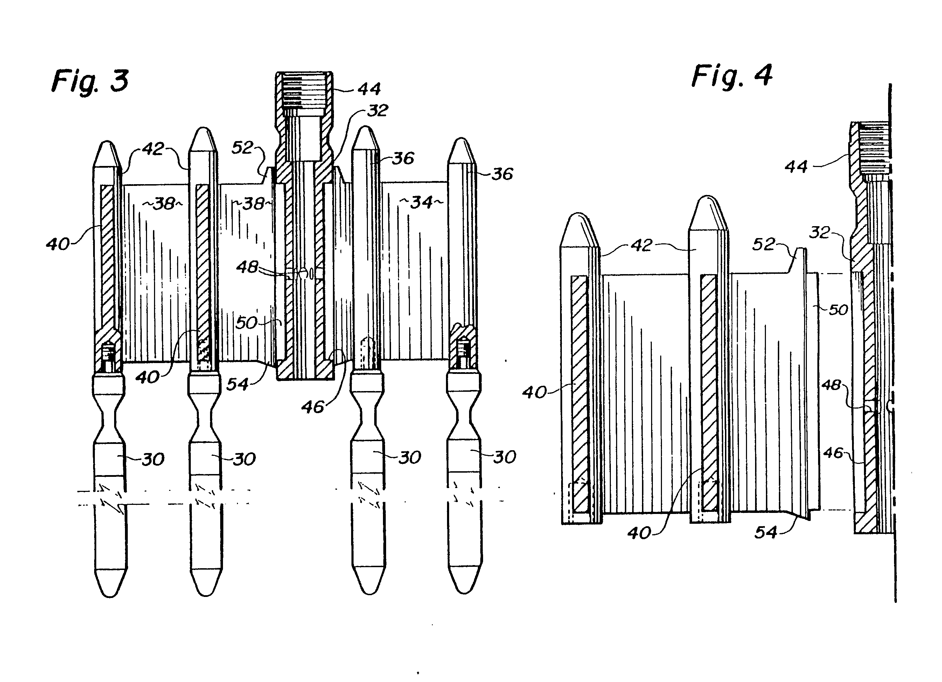

The central hub 32 is preferably in the form of an elongate cylindrical tube having an upper neck portion 44 (Figure 3) which is internally threaded for connection thereof to the drive mechanism (not shown) utilized in the reactor for raising and lowering the spider assembly together with the displacer rods connected thereto. The hollow hub 32 is adapted to accommodate therein a conventional load absorbing mechanism (not shown) which comprises a coil spring held in a state of partial compression between the upper and lower ends of the hub, and serves to prevent shock loading as the spider assembly 14 is lowered onto the core plate. The tubular hub 32 has formed therein a plurality of elongate indentations or slots 46 spaced circumferentially about the hub and extending axially thereof. Preferably, the slots 46 are all at the same axial height location and they do not extend completely through the wall of the tubular hub but communicate with the interior space of the latter each through a small hole 48.

As seen from Figure 2, in the preferred embodiment there are four straight vanes 34 and four T-bar vanes 38 spaced circumferentially about the hub 32 in alternating sequence, the straight vanes 34 being angularly spaced substantially ninety degrees apart, and the T-bar vanes 38 being angularly spaced substantially ninety degrees apart. The T-bar vanes 38 are longer in the radial dimension than the straight vanes 34 so that the T-bar vanes extend beyond the outer boundaries of the fuel assembly (10) associated with the spider assembly, and into overlying relationship with fuel assemblies (10A, 10B, 10C and 10D) adjacent thereto. The straight vanes 34 overlie only the fuel assembly 10. Each T-bar vane 38 has two T-bars 40, namely, an outer T-bar positioned at the distal end of the vane, and an inner T-bar spaced between the outer T-bar and the hub 32. The outer T-bar of each T-bar vane 38 overlies an adjacent fuel assembly while the inner T-bar overlies the central fuel assembly i.e. the fuel assembly 10 associated with the spider assembly. Preferably the T-bars 40 of each T-bar vane 38 extend parallel to one another and perpendicular with respect to the longitudinal or radial axis of the T-bar vane.

Likewise as seen from Figure 2, each straight vane 34 has two fingers 36, one of which (the outer finger) is located at the outer or distal end of the vane, and the other of which (the inner finger) is located between the outer finger and the hub 32. The vane portion between the outer and inner fingers and between the inner finger and the hub is in the form of a flat linear bar, whereas each finger is in the form of an elongate cylinder with its upper end dome-shaped. preferably, the diameter of each finger 36 is greater than the transverse thickness of the vane portion between the inner and outer fingers, and the longitudinal axis of the inner and outer fingers 36 are parallel with respect to one another as well as to the longitudinal axis of the hub 32, the longitudinal axes of the inner and outer fingers of each vane lying in the same plane as the longitudinal axis of the hub. As seen from Figure 3, the vane portion between the inner and outer fingers of each straight vane 34 is rectangular, as is the vane portion between the inner finger and the hub except that it includes upper and lower tabs 52 and 54 respectively, formed thereon adjacent the inner end thereof. The rectangular vane portions of each vane rigidly interconnect the fingers thereof so as to maintain them securely in proper relationship with respect to one another and to the hub. It will be noted from Figures 3 and 4 that the inner fingers project axially above the upper edges of the respective vanes to a greater height than the outer fingers. This feature facilitates a proper alignment of the spider assembly 14 with the upper internals of the reactor.

Referring again to Figure 2, each of the two T-bars 40 of each T-bar vane 38 has two fingers 42 which are on the terminal ends of the respective T-bar. Except for the provision and disposition of the T-bars 40, the T-bar vanes 38 are similar to the straight vanes 34 insofar as their fingers 42 are as elongate cylinders with parallel axes; the T-bars and the radial vane portions are linear and of rectangular shape; there are upper and lower tabs 52 and 54 on the inner ends of each vane 38; and the fingers 42 on the inner T-bars 40 extend axially to a height greater than the axial height of the fingers 42 on the outer T-bars. The overall relationship is such that the fingers 42 on the inner T-bars 40 are at the same axial height or level as inner fingers 36 of the straight vanes 34.

In order to maximize structural rigidity and also to reduce manufacturing costs, each of the straight vanes 34 together with its fingers 36, and each of the T-bar vanes 38 together with its T-bars 40 and fingers 42, is formed as a sub-unit of monolithic, jointless one-piece construction. The preferred method of thus manufacturing the T-bar vanes or sub-units 38 is by casting, whereas the preferred method of manufacturing the straight vanes or sub-units 34 is by machining, e.g. swaging, a bar stock to conform to the desired configurations shown, although the straight vanes or sub-units can also be formed by casting, if desired. It is believed that such a monolithic one-piece construction is superior in strength, and in its ability to withstand moment forces such as result from stepping actions, to a composite construction formed from individual components welded together.

As best seen from Figure 4, each of the sub-units 34 and 38 has an integral extension 50 formed on the inner end thereof, which extension 50 is dimensioned to fit tightly into the associated slot 46 of the hub 32 so that, when inserted therein, the sub-unit will be firmly and properly positioned on the hub and ready to be joined thereto in a suitable manner, e.g. by brazing. As mentioned earlier, the slots 46 do not extend completely through the wall of the tubular hub, so as not to unnecessarily weaken, but there are the small holes 48 which will enable the gases generated during brazing to escape into and through the hollow of the hub 32.

## Claims

1. A spider assembly for supporting control rods for vertical movement thereof in a nuclear reactor having a plurality of fuel assemblies disposed therein in closely spaced relationship with respect to each other, said spider assembly including a hub having thereon a first group of radial vanes which are spaced circumferentially about said hub substantially ninety degrees from each other and have fingers for connection thereof to some of the control rods in one fuel assembly (10) having the spider assembly associated therewith, and a second group of radial vanes which are spaced circumferentially about said hub substantially ninety degrees from each other and in alternating sequence with respect to the radial vanes of said first group, the vanes of said second group having thereon some fingers for connection thereof to the remaining control rods in said one fuel assembly (10), and additional fingers for connection thereof to control rods in fuel assemblies (10A, 10B, 10C, 10D) adjacent thereto, characterized in that the radial vanes of said first group are straight vanes (34), and the radial vanes of said second group are T-bar vanes (38) of greater radial dimension than said straight vanes (34) and each including an outer T-bar (40) which is located at the distal end of the associated T-bar vane, extends substantially perpendicular with respect to the radial direction thereof, and has one of said additional fingers (42) disposed on each end thereof, and an inner T-bar (40) which extends in substantially parallel spaced relationship with respect to the outer T-bar between the latter and said hub (32) and has one of said some fingers (42) disposed on each end thereof.

2. A spider assembly according to claim 1, characterized in that each of said straight and T-bar vanes (34, 38), together with said fingers thereon, is of a monolithic one-piece construction forming a jointless, rigid structural sub-unit.

3. A spider assembly according to claim 1 or 2, characterized in that each of the straight vanes (34) has one of its fingers (36) disposed at the outer end thereof, and has another of its fingers (36) disposed between said one finger and said hub (32).

4. A spider assembly according to claim 1, 2 or 3, characterized in that said hub (32) is tubular and has elongate slots (46) formed in wall portions thereof, each of said straight and T-bar vanes (34, 38) having an extension (50) formed integral therewith at the inner end thereof and fit tightly into one of said slots (46).

5. A spider assembly according to claim 4, characterized in that said slots (46) have a depth corresponding to only part of the wall thickness of the tubular hub (32), each of the slots (46) communicating with the hollow of the hub through a gas venting aperture (48) extending through the remaining wall thickness of the hub.

6. A spider assembly according to any one of the preceding claims, characterized in that each of the straight and T-bar vanes (34, 38) is of substantially constant height, having regard to the axial direction of the hub (32), and that said straight and T-bar vanes are mounted on the hub at substantially the same axial height location.

**Patentansprüche**

1. Jochanordnung zur vertikal beweglichen Halterung von Steuerstäben in einem Kernreaktor, der eine Vielzahl von eng nebeneinander angeordneten Brennelementen enthält, wobei die Jochanordnung eine Nabe aufweist, die eine erste Gruppe von radialen Armen, die mit gegenseitigen Winkelabständen von jeweils etwa 90° um die Nabe herum angeordnet sind und Finger zur Verbindung mit einigen der Steuerstäbe in einem Brennelement (10) aufweisen, welchem die Jochanordnung zugeordnet ist, und eine zweite Gruppe von radialen Armen trägt, die mit gegenseitigen Winkelabständen von jeweils etwa 90° um die Nabe herum und in bezüglich der radialen Arme der ersten Gruppe alternierender Folge angeordnet sind und einige Finger zur Verbindung mit den übrigen Steuerstäben in dem genannten einen Brennelement (10) sowie zusätzliche Finger zur Verbindung mit Steuerstäben in benachbarten Brennelementen (10A, 10B, 10C, 10D) aufweisen, dadurch gekennzeichnet, daß die radialen Arme der genannten ersten Gruppe gerade Arme (34) und die radialen Arme der zweiten Gruppe T-förmige Arme (38) größerer radialer Abmessung als die geraden Arme (34) sind und jeweils einem äußeren Quersteg (40), der am distalen Ende des betreffenden T-förmigen Armes angeordnet ist und im wesentlichen senkrecht zu dessen Radialrichtung verläuft und an jedem seiner Enden einen der genannten zusätzlichen Finger (42) trägt, und einen inneren Quersteg (40) aufweist, der im wesentlichen parallel und mit Abstand zum äußeren Quersteg zwischen dem letzteren und der Nabe (32) verläuft und an jedem seiner Enden einen der genannten einigen Fingern (42) trägt.

2. Jochanordnung nach Anspruch 1, dadurch gekennzeichnet, daß jeder der geraden und T-förmigen Arme (34, 38) zusammen mit den daran befindlichen Fingern als monolithische einstückige Konstruktion ausgebildet ist, die eine verbindungslose starre Unterbaugruppe bildet.

3. Jochanordnung nach Anspruch 1 oder 2, dadurch gekennzeichnet, daß jeder der geraden Arme (34) einen seiner Finger (36) an seinem äußeren Ende und einen weiteren seiner Finger (36) zwischen dem genannten einen Finger und der Nabe (32) aufweist.

4. Jochanordnung nach Anspruch 1, 2 oder 3, dadurch gekennzeichnet, daß die Nabe (32) rohrförmig ist und in Wandteilen davon gebildete längliche Schlitze (46) aufweist, und daß jeder der geraden und T-förmigen Arme (34, 38) einen damit einstückig ausgebildeten Ansatz (50) an seinem inneren Ende aufweist, der satt in einen der genannten Schlitze (46) paßt.

5. Jochanordnung nach Anspruch 4, dadurch gekennzeichnet, daß die genannten Schlitze (46) eine nur einem Teil der Wanddicke der rohrförmigen Nabe (32) entsprechende Tiefe haben und daß jeder der Schlitze (46) mit dem Inneren der Nabe durch eine Entlüfteöffnung (48) in Verbindung steht, die durch die restliche Wanddicke der Nabe verläuft.

6. Jochanordnung nach einem der vorhergehenden Ansprüche, dadurch gekennzeichnet, daß jeder der geraden und T-förmigen Arme (34, 38) eine mit Bezug auf die Axialrichtung der Nabe (32) im wesentlichen gleichbleibende Höhe aufweist und daß die geraden und T-förmigen Arme im wesentlichen in der gleichen axialen Höhenposition an der Nabe montiert sind.

**Revendications**

1. Agencement d'araignée pour supporter des barres de commande en vue du déplacement vertical de celles-ci dans un réacteur nucléaire ayant une pluralité d'assemblages combustibles disposés dans celui-ci en étant séparés les uns des autres par une faible distance, ledit agencement d'araignée ayant un moyeu sur lequel se trouvent un premier groupe d'ailettes radiales espacées sensiblement de quatre-vingt-dix degrés les unes des autres sur la périphérie du moyeu et pourvues de doigts servant à relier celles-ci à certaines des barres de commande d'un premier assemblage combustible (10) auquel est associé l'agencement d'araignée, et un second groupe d'ailettes radiales espacées sensiblement de quatre-vingt-dix degrés les unes des autres sur la périphérie du moyeu et en alternance par rapport aux ailettes radiales du premier groupe, les ailettes dudit second groupe portant quelques doigts destinés à les relier aux barres de commande restantes dudit premier assemblage combustible (10), et des doigts supplémentaires destinés à les relier à des barres de commande des assemblages combustibles (10A, 10B, 10C, 10D) adjacents à celles-ci, caractérisé en ce que les ailettes radiales dudit premier groupe sont des ailettes rectilignes (34), et les ailettes radiales dudit second groupe sont des ailettes (38) à barre en T de dimensions supérieures à celles desdites ailettes rectilignes (34) et comportant chacune une barre en T extérieure (40) qui se trouve à l'extrémité distale de l'ailette à barre en T associée, s'étend sensiblement de manière perpendiculaire à la direction radiale de celle-ci, et a l'un desdits doigts supplémentaires (42) disposé sur chacune de ses extrémités, et une barre en T intérieure (40) qui s'étend sensiblement de manière parallèle et espacée par rapport à la barre en T extérieure entre cette dernière et le moyeu (32) et a l'un desdits quelques doigts (42) disposé sur chacune de ses extrémités.

2. Agencement d'araignée selon la revendication 1, caractérisé en ce que chacune desdites ailettes (34, 38) rectilignes et à barre en T, avec les doigts sur celles-ci, est une construction monolithique d'une seule pièce formant un sous-ensemble structural rigide, sans raccords.

3. Agencement d'araignée selon la revendication 1 ou 2, caractérisé en ce que chacune des ailettes rectilignes (34) a un premier de ses doigts (36) disposé à son extrémité extérieure, et a un autre de ses doigts disposé entre ledit premier doigt et le moyeu (32).

4. Agencement d'araignée selon la revendication 1, 2 ou 3, caractérisé en ce que le moyeu (32) est tubulaire et a des rainures allongées (46) formées dans ses parties formant parois, chacune des ailettes (34, 38) rectilignes et à barre en T ayant un prolongement (50) qui en fait partie intégrante à son extrémité intérieure et qui s'ajuste de manière serrée dans une des rainures (46).

5. Agencement d'araignée selon la revendication 4, caractérisé en ce que les rainures (46) ont une profondeur correspondant seulement à une partie de l'épaisseur de la paroi du moyeu tubulaire (32), chacune des rainures (46) communiquant avec la partie creuse du moyeu via une ouverture de dégazage (48) s'étendant à travers le reste de l'épaisseur de la paroi du moyeu.

6. Agencement d'araignée selon l'une quelconque des revendications précédentes, caractérisé en ce que chacune des ailettes (34, 38) rectilignes et à barre en T a une hauteur sensiblement constante pour ce qui concerne le sens axial du moyeu (32), et en ce que lesdites ailettes rectilignes et à barre en T sont montées sur le moyeu dans une position située sensiblement à la même hauteur axiale.

*Fig. 1*

## Fig. 2

Fig. 4

Fig. 3